# EUROPEAN PATENT SPECIFICATION

(11) **EP 0 612 648 B1**
(45) Date of publication and mention of the grant of the patent: **29.01.1997**
(21) Application number: 94830080.1
(22) Date of filing: 22.02.1994
(51) Int. Cl.: B62B 1/12, B62B 1/14

(54) **Improved trolley for hand-carrying items such as suitcase and the like**
Verbesserter Wagen für handgetragene Gegenstände wie Koffer oder ähnliches
Chariot amélioré pour des articles portés à la main comme des valises ou analogues

(30) Priority: 24.02.1993 IT MI930357
(43) Date of publication of application: 31.08.1994
(73) Proprietor: VORWERK FOLLETTO S.a.s. di JOHANNES HOOGENDIJK & CO., 20146 Milano (IT)
(72) Inventor: Marafante, Gentile, Carnate (Milano) (IT); Tecchiati, Mario, Besana Brianza (Milano) (IT)
(74) Representative: Adorno, Silvano

(56) References cited:
- FR-A- 899 201
- FR-A- 1 247 232
- FR-A- 1 280 788
- FR-A- 1 584 070
- GB-A- 752 398

## Description

The present invention concerns trolleys for hand-carrying items such as suitcases and the like, and in particular a trolley provided with an item retaining device suitable to act also as a supporting stand.

It is known that many types of trolleys provided with a pair of wheels presently exist, for hand-carrying items of various kinds, such as suitcases, packages, bags, etc. Such trolleys are usually provided with retention devices for the carried item consisting in straps, elastic ropes, etc. and are capable of standing by resting on their base in a vertical position or a position slightly inclined forward, i.e. on the side where the carried item is positioned, in order to keep the center of gravity of the item-trolley assembly within the resting area.

A similar type of trolley for carrying bulky items or for carrying simultaneously a plurality of items is provided with a supporting structure projecting backwards from the main trolley structure on which the pair of wheels is mounted. A typical example are trolleys conventionally used by porters in railway stations and the like, which, however, have a structure much heavier than that of the other above-mentioned types of trolley.

From FR-A-899 201 a trolley is known, having all the features of the preamble of claim 1, in which both the supporting member at the back and a substantially U-shaped device or arc-shaped stand are pivotally mounted on the frame structure for rotating from opposite directions to the co-planarity with the frame, thus obtaining a minimum encumbrance, when no load is on the trolley and this is in a resting vertical position.

However said U-shaped stand device has no function of load retention and in general the prior art trolleys suitable for carrying normally large items have never been able to stand, when loaded, in a backwards inclined position like porter trolleys, while the latter are too heavy and bulky to be easily used for carrying small-size items and/or to be transported by car, upstairs, etc.

Therefore, the absence of a trolley combining the above-described characteristics results in a problem for those people, such as salesmen, which feel the need for a trolley which is light and small, yet capable of carrying items as large as a couple of large suitcases and capable of resting in a backwards inclined positions.

The object of the present invention is to satisfy the above-cited need, thus solving the above-described problems.

This object is achieved by means of a trolley as defined in the appended claim 1.

Therefore, the improved trolley according to the present invention has the advantage of combining lightness and small size with the possibility of resting in an inclined position, in addition to the conventional vertical position.

Such a trolley has the advantage of allowing an easier loading, for example, of heavy suitcases, as well as an easy opening of said suitcases with no need to remove them form the trolley.

Another advantage of the trolley according to the present invention is to avoid the need of making an effort to incline the trolley backwards on starting the motion or to hold back the trolley burdened by a heavy load on standing it vertically at the stop.

A further advantage of some embodiments of the present trolley is the possibility of adjusting the retention device/stand so as to house items of different depth and/or to change the inclination of the trolley standing backwards.

These and other advantages and characteristics of the trolley according to the present invention will be apparent from the following detailed description of a preferred embodiment thereof, reported as a non-limiting example, referring to the annexed drawings wherein:
Fig. 1 is a perspective view of the present trolley loaded with two suitcases, wherein the overturning movement of the retention device is illustrated;
Fig 2 is a perspective similar to the preceding one of the trolley resting backwards on the stand;
Fig. 3a and 3b are enlarged views of two details of fig. 2 taken with the same perspective of said figure; and
Fig. 4 is a perspective view of the empty trolley illustrating the folding movement of the structure upper portion to reduce the trolley size.

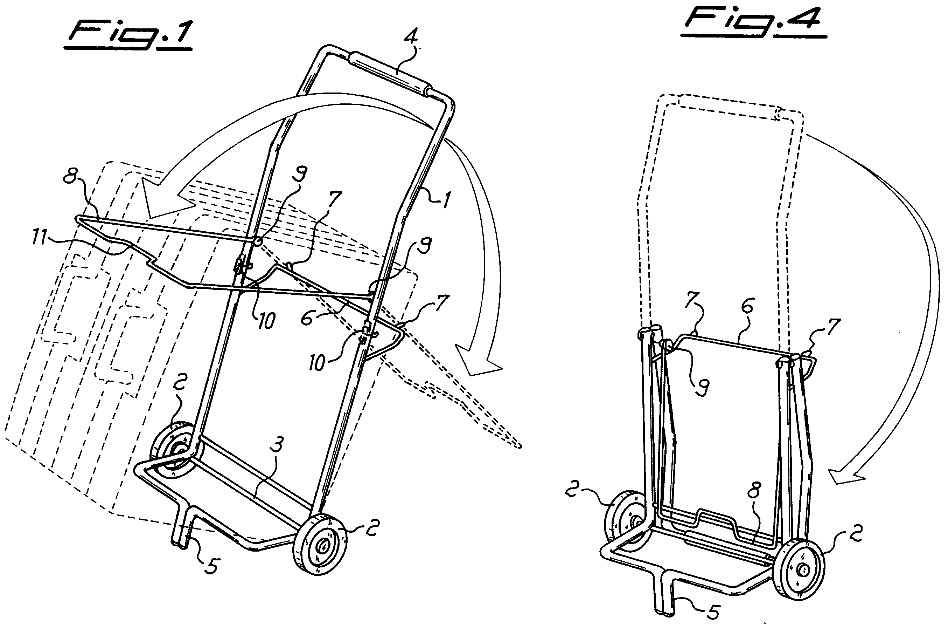

Referring to fig. 1, there is seen that a trolley according to the present invention consists of a tubular structure 1 provided with a pair of wheels 2 mounted on an axle 3 integral with said structure 1, which also includes a handle 4 for dragging the trolley and ends at the bottom with a supporting foot 5 as high as the radius of wheels 2, so that the trolley stands in a vertical position.

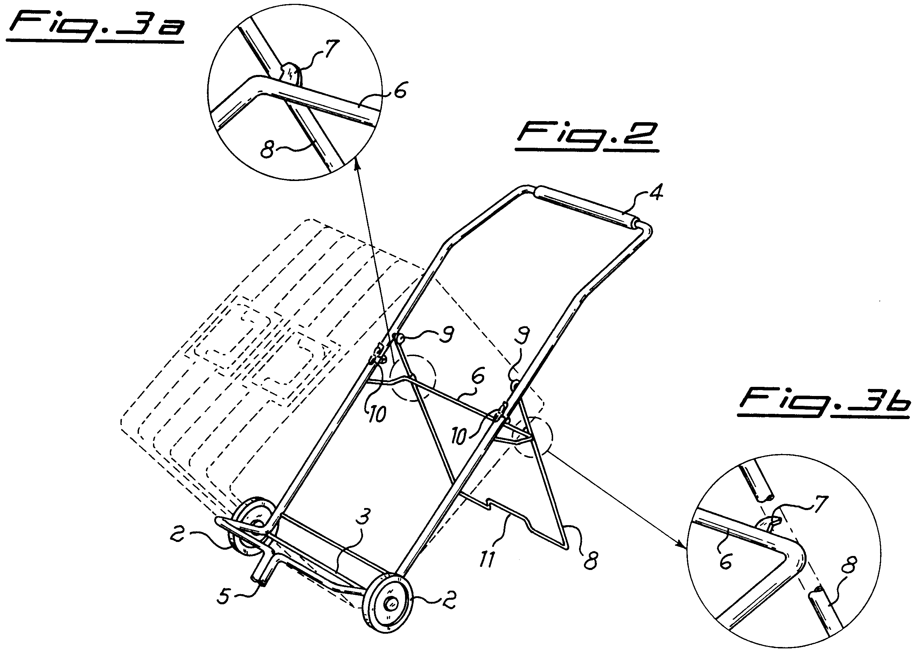

A substantially U-shaped small arc 6 projects backward from an area of structure 1 intermediate in height; said arc 6 acts as a rear support for the trolley load and carries stops 7 which block a retention device 8, also consisting of a substantially U-shaped arc, when it is overturned backwards on its pins 9 and transforms into a stand (figs.2, 3a, 3b). It should be noted that pins 9 are positioned on the inner face of the sides of structure 1 upwards with respect to arc 6, to allow the complete overturning of device 8, but sufficiently low to allow the passage of said device 8 below handle 4.

A pair of hinges 10 allowing the folding of the upper portion of structure 1 (fig.4) is preferably located in a position intermediate between arc 6 and pins 9, thus significantly reducing the trolley height and making easier its transportation when empty, for example in a car trunk. In fig.4 it is shown that arc 6 is slightly narrower than structure 1, so as to allow the upper part of said structure 1 to fold backwards until touching the lower part. Moreover, there is seen that the position of hinges 10 is such that the height of the upper folded portion is slightly smaller than the height of the lower part, so that the overall height of the folded trolley is equal to the height of the lower part.

Device 8 is shaped with a recess 11, located on the base of the U and directed towards structure 1, suitable to exert a certain pressure on the trolley load to keep it pushed against the back arc 6, so that it is not subjected to being shaken during the transport. It should be noted that recess 11 also allows easy grasping of device 8 in the areas aside said recess 11 to carry out the overturning of said device 8 in stand position. Obviously, said recess 11 could be formed in any shape suitable to achieve the above-mentioned object, so that it may be extended to the whole width of device 8 and it may have a sinusoidal, saw-tooth, etc. shape.

Referring now to figs.2, 3a and 3b, there is illustrated the device according to the present invention resting backwards, with device 8 acting as a stand to firmly support said trolley in an inclined position. Stops 7, illustrated in figs.3a and 3b, consist of curved members facing outwards to snap-block device 8 by making use of the elasticity of the sides of said device 8. It is clear that these stops 7 are just an example of means suitable to retain device 8 when it abuts against arc 6, and they could also face inwards and be positioned on arc 6 nearer to the ends thereof, or they could be made in various other ways such as bolts, linear sliders, etc.

From the above it is apparent that the described embodiment fully achieves the intended objects; it is also apparent that the inventive concept of the trolley according to the present invention lends itself to be realized with a great number of different solutions as far as its single composing members are concerned.

One of the main possible variations for a greater flexibility of use is intended for those which use items of different sizes; in this case it is very useful that device 8 be adjustable in length, for example realizing it in two portions telescopically inserted one into the other and then fixed, upon completion of the length adjustment, by means of a locking pin inserted into a series of matching holes formed in the two portions, or by means of an expansion lock controlled by a butterfly-head screw, or a similar means for the manual operation, suitable to mutually block the two portions by friction, and so on. Such a device 8 adjustable in length allows not only to carry items of different sizes, but also to change the trolley inclination in the inclined position when said device 8 is overturned backwards to act as a stand.

Another possible variation, which may be adopted either per se or together with the preceding one, is that of making the inclination of arc 6 adjustable with respect to structure 1, thus obtaining the same advantages of the previous embodiment, though to a lesser extent, and the further advantage of reducing the overall depth of the folded trolley.

A further variation is to mount pins 9 on structure 1 in a slidable way, to compensate the height changes of the load and to change the inclination of the inclined trolley, holding good that the vertical travel of said pins 9 is limited at the bottom by the presence of hinges 10, but in case they are absent it may be freely chosen.

To reduce the overall depth of the present trolley, it is also possible to replace arc 6 with a crossbar connecting the two sides of structure 1 and supporting the load at the back, in this case the load being completely positioned in front of axle 3; this variation implies that device 8 be blocked in stand position through other means such as, for example, a linear slider located inside structure 1 which is inserted into a corresponding hole formed in pin 9 to prevent its further rotation, or an additional arc pivoted on device 8 in such a position as to engage upwards oriented hooks arranged along the back face of the sides of structure 1, thus returning in practice to the situation illustrated in fig.2.

Considering the fact that the possible paths of the trolley user may include stairs, it is also possible to replace the usual wheels 2 with special wheels suitable to climb over the steps such as, for example, a wheel consisting of three small wheels mounted at the vertices of a structure shaped as an equilateral triangle and centrally pivoted on axle 3.

Finally, it is clear that structure 1 itself may be somewhat changed in shape to be adapted to particular needs of the user, same as all members and their mutual disposition.

## Claims

1. Trolley for hand-carrying items such as suitcases and the like, consisting of a structure (1) provided with a pair of wheels (2) mounted on an axle (3), with a member (6) supporting the load at the back of the trolley and with a device (8) consisting of a substantially U-shaped arc, connected to said structure (1) through pins (9) located on the inner face of the sides of said structure (1), characterized in that, said pins are located above said supporting member (6) and in that said device (8) is suitable for retaining the load on the trolley when it is turned forward of the structure (1) and for being overturned backwards within said structure (1), the device (8) being further provided with stops (7) for locking said device (8) in the overturned position as a stand suitable for supporting said trolley in a backwards inclined positions.

2. Trolley according to claim 1, characterized in that the supporting member consists of a substantially U-shaped arc (6) projecting backwards from an area of structure (1) intermediate in height.

3. Trolley according to claim 2, characterized in that stops (7) consist of a pair of curved members facing outwards and located on arc (6) internally with respect to the point of contact between device (8) and said arc (6).

4. Trolley according to claim 2, characterized in that stops (7) consist of a pair of curved members facing inwards and located on arc (6) externally with respect to the point of contact between device (8) and said arc (6).

5. Trolley according to claim 1, characterized in that stops (7) consists of linear sliders located inside structure (1) and suitable to engage corresponding holes formed in the body of pins (9) thereby preventing the rotation thereof.

6. Trolley according to claim 1, characterized in that stops (7) consist of hooks facing upwards arranged along the back face of the sides of structure (1), and device (8) is provided with an additional arc pivoted thereto in such a position as to be able to engage said hooks.

7. Trolley according to one or more of the preceding claims, characterized in that structure (1) is provided with a pair of hinges (10) located on the sides of said structure (1) and suitable to allow the upper portion of said structure (1) to be folded.

8. Trolley according to claims 2 and 7, characterized in that arc (6) is sufficiently narrower than structure (1) so as to allow the upper portion of said structure (1) to be folded backwards until it gets in touch with the lower portion of said structure (1).

9. Trolley according to claim 7, characterized in that hinges (10) are located in an area of structure (1) intermediate in height such as to reduce by half the overall height of the folded trolley with respect to the extended trolley.

10. Trolley according to one or more of the preceding claims, characterized in that device (8) is provided with a recess (11) located on the base of the U and directed towards structure (1), suitable to exert a certain pressure on the load thereby keeping it pushed against the supporting member at the back and to make easier the grasping of said device (8) for the overturning operation in stand position.

11. Trolley according to one or more of the preceding claims, characterized in that device (8) is made up of two portions telescopically inserted one into the other and it is provided with means for locking its length adjustment.

12. Trolley according to one or more of the preceding claims, characterized in that structure (1) is provided with slots suitable to allow pins (9) to have a certain vertical travel, said pins (9) being provided with locking means suitable to fix them at the desired height.

## Patentansprüche

1. Wagen für Handgepäck wie z.B. Koffer u.ä., der aus einem Rahmen (1) mit einem an einer Achse (3) montierten Räderpaar (2) besteht und ein die Last an der Rückseite des Wagens abstützendes Element (6) sowie eine aus einem im wesentlichen U-förmigen Bügel bestehende Vorrichtung (8) umfaßt, die mittels an der Innenfläche der Seitenteile des Rahmens (1) befestigter Zapfen (9) mit diesem Rahmen verbunden ist, **dadurch gekennzeichnet**, **daß** diese Zapfen oberhalb des Stützelements (6) angeordnet sind und die Vorrichtung (8) so konzipiert ist, daß sie in einer von dem Rahmen (1) vorwärts ausgeklappten Stellung die Last auf dem Wagen zurückhalten kann, sich jedoch auch innerhalb des Rahmens (1) zurückklappen läßt, wobei die Vorrichtung (8) außerdem Anschläge (7) zu ihrer Verriegelung in der zurückgeklappten Stellung aufweist, in der diese Vorrichtung (8) als Ständer dienen kann, der einer Abstützung des Wagens in einer nach hinten geneigten Stellung erlaubt.

2. Wagen gemäß Anspruch 1, **dadurch gekennzeichnet, daß** das Stützelement aus einem im wesentlichen U-förmigen Bügel (6) besteht, der sich von einem in mittlerer Höhe gelegenen Bereich des Rahmens (1) nach hinten erstreckt.

3. Wagen gemäß Anspruch 2, **dadurch gekennzeichnet, daß** die Anschläge (7) aus einem Paar gekrümmter, nach außen weisender Elemente bestehen, die an dem Bügel (6) innen - bezogen auf den Berührungspunkt zwischen Vorrichtung (8) und Bügel (6) - angeordnet sind.

4. Wagen gemäß Anspruch 2, **dadurch gekennzeichnet, daß** die Anschläge (7) aus einem Paar gekrümmter, nach innen weisender Elemente bestehen, die an dem Bügel (6) außen - bezogen auf den Berührungspunkt zwischen Vorrichtung (8) und Bügel (6) - angeordnet sind.

5. Wagen gemäß Anspruch 1, **dadurch gekennzeichnet, daß** die Anschläge (7) aus geradlinig verschieblichen Elementen bestehen, die innerhalb des Rahmens (1) liegen und in entsprechende Öffnungen in den Körpern der Zapfen (9) eingreifen, wodurch deren Drehung verhindert wird.

6. Wagen gemäß Anspruch 1, **dadurch gekennzeichnet**, **daß** die Anschläge (7) aus aufwärts gerichteten Haken bestehen, die entlang der Rückseite der Seitenteile des Rahmens (1) angeordnet sind, und daß die Vorrichtung (8) mit einem daran klappbar befestigten zusätzlichen Bügel ausgestattet ist, dessen Lage so gewählt ist, daß er in diese Haken eingreifen kann.

7. Wagen gemäß einem oder mehreren der vorstehenden Ansprüche, **dadurch gekennzeichnet, daß** der Rahmen (1) mit einem Paar Scharniere (10) ausgestattet ist, die an den Seitenteilen des Rahmens (1) so angeordnet sind, daß sich das Oberteil des Rahmens (1) abklappen läßt.

8. Wagen gemäß Anspruch 2 und 7, **dadurch gekennzeichnet, daß** der Bügel (6) um ein hinreichendes Maß schmaler als der Rahmen (1) ist, so daß sich das Oberteil des Rahmens (1) nach hinten klappen läßt, bis es an dem Unterteil des Rahmens (1) anliegt.

9. Wagen gemäß Anspruch 7, **dadurch gekennzeichnet**, **daß** die Scharniere (10) in einem auf mittlerer Höhe liegenden Bereich des Rahmens (1) angeordnet sind, so daß sich die Gesamthöhe des zusammengeklappten Wagens gegenüber dem auseinandergeklappten Zustand um die Hälfte verringert.

10. Wagen gemäß einem oder mehreren der vorstehenden Ansprüche, **dadurch gekennzeichnet, daß** die Vorrichtung (8) an der Querverbindung des U-Bügels einen zu dem Rahmen (1) weisenden Rücksprung (11) aufweist, der einen gewissen Druck auf die Last ausüben und diese damit gegen das rückwärtige Stützelement gedrückt halten kann und zudem das Ergreifen der Vorrichtung (8) zum Umklappen in ihre Ständerstellung erleichert.

11. Wagen gemäß einem oder mehreren der vorstehenden Ansprüche, **dadurch gekennzeichnet**, daß die Vorrichtung (8) aus zwei teleskopartig ineinandergeschobenen Teilen besteht und über Mittel zur Verriegelung ihrer Längenverstellung verfügt.

12. Wagen gemäß einem oder mehreren der vorstehenden Ansprüche, **dadurch gekennzeichnet, daß** der Rahmen (1) über Schlitze verfügt, die eine gewisse vertikale Verschieblichkeit der Zapfen (9) erlauben, wobei diese Zapfen (9) Verriegelungsmittel aufweisen, mit denen sie sich auf einer gewünschten Höhe fixieren lassen.

## Revendications

1. Chariot destiné à des articles portés à la main telles que des valises et analogues, constitué d'une structure (1) équipée d'une paire de roues (2) montée sur un axe (3), ayant un élément (6) supportant la charge à l'arrière du chariot et ayant un dispositif (8) constitué d'un arc pratiquement en forme de U, relié à ladite structure (1) par l'intermédiaire de broches (9) situées sur la face intérieure des côtés de ladite structure (1), caractérisé en ce que lesdites broches sont situées au-dessus dudit élément de support (6) et en ce que ledit dispositif (8) est apte à retenir la charge sur le chariot lorsqu'il est tourné vers l'avant de la structure (1) et pour être renversé vers l'arrière à l'intérieur de ladite structure (1), le dispositif (8) étant en outre équipé de butées d'arrêt (7) pour bloquer ledit dispositif (8) dans sa position renversée comme une béquille apte à supporter ledit chariot dans des positions inclinées vers l'arrière.

2. Chariot selon la revendication 1, caractérisé en ce que l'élément de support est constitué d'un arc pratiquement en forme de U (6) en saillie vers l'arrière depuis une zone de la structure (1) de hauteur intermédiaire.

3. Chariot selon la revendication 2, caractérisé en ce que les butées d'arrêt (7) sont constituées d'une paire d'éléments recourbés orientée vers l'extérieur et située sur l'arc (6) à l'intérieur par rapport au point de contact entre le dispositif (8) et ledit axe (6).

4. Chariot selon la revendication 2, caractérisé en ce que les butées d'arrêt (7) sont constituées d'une paire d'éléments recourbés orientés vers l'intérieur et situés sur l'arc (6) à l'extérieur par rapport au point de contact entre ledit dispositif (8) et ledit arc (6).

5. Chariot selon la revendication 1, caractérisé en ce que les butées d'arrêt (7) sont constituées de pièces coulissantes linéaires situées à l'intérieur de la structure (1) et aptes à s'introduire dans les perçages correspondants formés dans le corps des broches (9), empêchant par ce moyen la rotation de celles-ci.

6. Chariot selon la revendication 1, caractérisé en ce que les butées d'arrêt (7) sont constituées de crochets orientés vers le haut et disposés le long de la face arrière des côtés de la structure (1), et en ce que le dispositif (8) est équipé d'un arc supplémentaire qui est pivotant dans une position telle qu'il peut venir en prise avec lesdits crochets.

7. Chariot selon une ou plusieurs des revendications précédentes, caractérisé en ce que la structure (1) est équipée d'une paire de charnières (10) situées sur les côtés de ladite structure (1) et apte à permettre à la partie supérieure de ladite structure (1) d'être repliée.

8. Chariot selon les revendications 2 et 7, caractérisé en ce que l'arc (6) est suffisamment plus étroit que la structure (1) de manière à permettre à la partie supérieure de ladite structure (1) d'être repliée vers l'arrière jusqu'à ce qu'elle vienne on contact avec la partie inférieure de ladite structure (1).

9. Chariot selon la revendication 7, caractérisé en ce que les charnières (10) sont situées dans une zone de la structure (1) à une hauteur intermédiaire de manière à réduire de moitié la hauteur totale du chariot replié par rapport au chariot déplié.

10. Chariot selon l'une ou plusieurs des revendications précédentes, caractérisé en ce que le dispositif (8) est pourvu d'une encoche (11) située sur la base du U et dirigée vers la structure (1), apte à exercer une certaine pression sur la charge, la maintenant par ce moyen poussée contre l'élément de support à l'arrière et pour rendre plus facile la saisie dudit dispositif (8) pour l'opération de renversement on position de béquille.

11. Chariot selon l'une ou plusieurs des revendications précédentes, caractérisé on ce que le dispositif (8) est constitué de deux parties introduites téléscopiquement l'une dans l'autre et en ce qu'il est équipé d'un moyen pour bloquer son réglage de longueur.

12. Chariot selon l'une ou plusieurs des revendications précédentes, caractérisé en ce que la structure (1) est pourvue de fentes aptes à permettre aux broches (9) d'avoir un certain parcours vertical, lesdites broches (9) étant pourvues d'un moyen de blocage approprié pour les fixer à la hauteur souhaitée.
